# EUROPEAN PATENT SPECIFICATION

(11) **EP 1 992 523 B1**
(45) Date of publication and mention of the grant of the patent: **31.08.2011**
(21) Application number: 08104019.8
(22) Date of filing: 19.05.2008
(51) Int. Cl.: B60P 7/13, B62D 53/06

(54) **An adjustable bolster assembly for a semi-trailer**
Einstellbare Polsteranordnung für einen Sattelauflieger
Ensemble de châssis réglable pour semi-remorque

(30) Priority: 17.05.2007 IE 20070361
(43) Date of publication of application: 19.11.2008
(73) Proprietor: Dennison, David, Straffan, County Kildare (IE)
(72) Inventor: Dennison, David, Straffan, County Kildare (IE)
(74) Representative: Schütte, Gearoid

(56) References cited:
- EP-A- 1 621 399
- DE-U1- 20 012 977

## Description

### Introduction

This invention relates to trailers for carrying containers.

An adjustable bolster assembly for a semi-trailer is disclosed in EP 1621399 A1. This document discloses an adjustable bolster assembly having a pair of bolsters each carrying a twistlock, and means for mounting each bolster on the semi-trailer. The bolsters can pivot together to position the twistlocks for use at different heights on the vehicle frame. However, this arrangement is not suitable for use on the rear part of an extendable trailer as one or other of the bolsters always projects above a top surface of the rear part and thus will prevent it from sliding fully beneath a front part of the extendable trailer in the fully collapsed position of the extendable trailer.

According to the invention there is provided a semi-trailer having an adjustable bolster assembly, said bolster assembly including:
a pair of bolsters,
each bolster carrying a twistlock,
means for mounting each bolster on the semi-trailer,
characterised in that said bolsters comprise an inner bolster and an outer bolster,
the inner bolster being nestable within the outer bolster when the outer bolster is in an in-use position and the bolsters being movable relative to each other to expose the inner bolster for use.

In a preferred embodiment the inner bolster and the outer bolster are pivotally movable together and apart.

In another embodiment the bolsters are pivotally movable about a substantially horizontal pivot axis.

Conveniently a common pivot pin may be provided for pivotally mounting both the inner bolster and the outer bolster on the semi-trailer.

In another embodiment, each bolster is pivotally mounted on the pivot pin for movement between a nested in-use position and a nested stored position.

In another embodiment, each bolster is pivotable about the pivot pin between a raised in-use position above the pivot pin and a lowered stored position below the pivot pin.

In a preferred embodiment locking means Is provided for releasably flocking each bolster in an in-use position.

In another embodiment, the locking means is a locking pin engagable between each bolster and a bolster support on the trailer.

In a particularly preferred embodiment, each bolster has an inverted U-shape with an upper container bearing platform and downwardly depending side legs for resting on a support on the semi-traiter.

In another embodiment, the pivot pin is engagable with a lower end of each side leg.

Preferably the pivot pin is engagable with each side leg at a front end of the side leg.

In another embodiment the semi-trailer incorporates a pair of the adjustable bolster assemblies in alignment at opposite sides of the semi-trailer.

In a preferred embodiment, the bolster assemblies are mounted at a rear end of the semi-trailer.

In a particularly preferred embodiment, the semi-trailer is an extendable trailer, having a front part and a rear part which are slidably interconnected for length adjustment of the trailer.

In a further embodiment, the bolsters are pivotally mounted on the trailer such that they lie below a top surface of the rear part of the trailer when the bolsters are in the lowered stored position.

In another embodiment the bolsters are pivotally mounted on the rear part of the trailer such that then the bolsters are in the lowered stored position they are slidable beneath any lateral protrusions at a rear end of the front part of the trailer for collapsing the trailer parts together.

### Detailed Description of the Invention

The invention will be more clearly understood by the following description of some embodiments thereof, given by way of example only with reference to the accompanying drawings, in which:
Fig. 1 is a side elevational view of an adjustable bolster assembly according to the invention, shown in a first position of use;
Fig. 2 is a side elevational view of the adjustable bolster assembly, shown in a second position of use;
Fig. 3 is a side elevational view of the adjustable bolster assembly, shown in a third position of use;

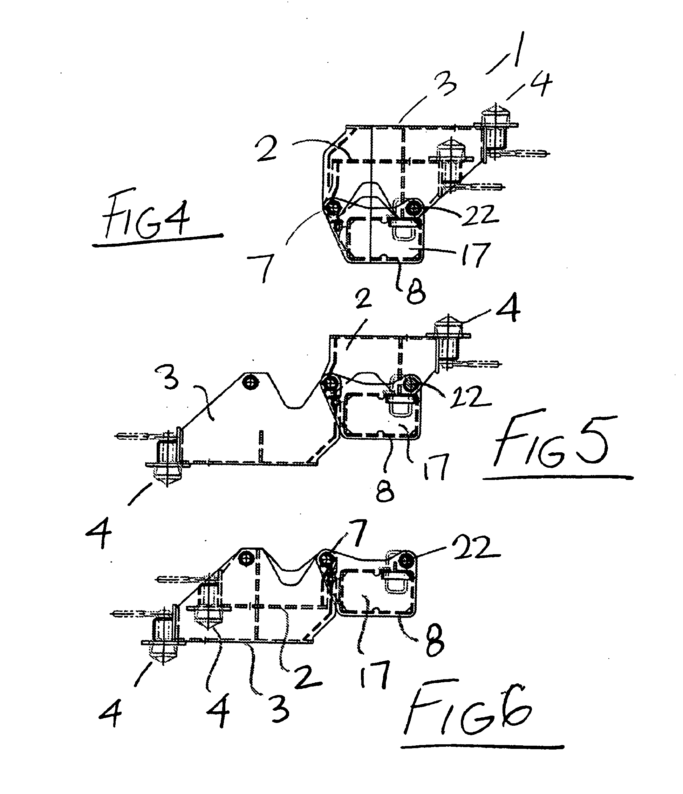

Fig. 4 is a view similar to Fig. 1;
Fig. 5 is a view similar to Fig. 2;
Fig. 6 is a view similar to Fig. 3;

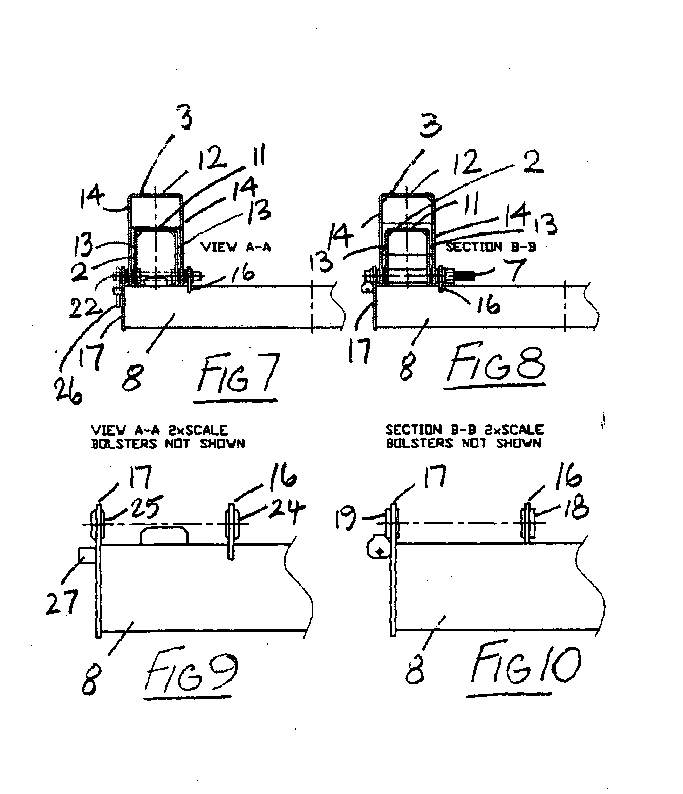

Fig. 7 is a rear elevational view of the adjustable bolster assembly taken along the line A-A of Fig. 1;
Fig. 8 is a sectional view taken along the line B-B of Fig. 1;
Fig. 9 is an enlarged rear elevational view showing a mounting support for the bolster assembly;
Fig. 10 is an enlarged partially sectioned rear elevational view corresponding to the view shown in Fig. 8, showing the support for the bolster assembly;
Fig. 11 is a side elevational view of a Gooseneck sliding skeletal trailer incorporating the adjustable bolster assembly according to the invention;
Fig. 12 is an elevational view of the semi-trailer incorporating the adjustable bolster assembly shown in a first position of use carrying a container;
Fig. 13 is a view similar to Fig. 12 showing the semi-trailer in a second position of use carrying an alternative container;
Fig. 14 is a detail side elevational view showing a rear portion of the semi-trailer with the adjustable bolster assembly in an operating position corresponding to that shown in Fig. 12; and
Fig. 15 is a view similar to Fig. 14 showing the adjustable bolster assembly in an operating position corresponding to that shown in Fig. 13.

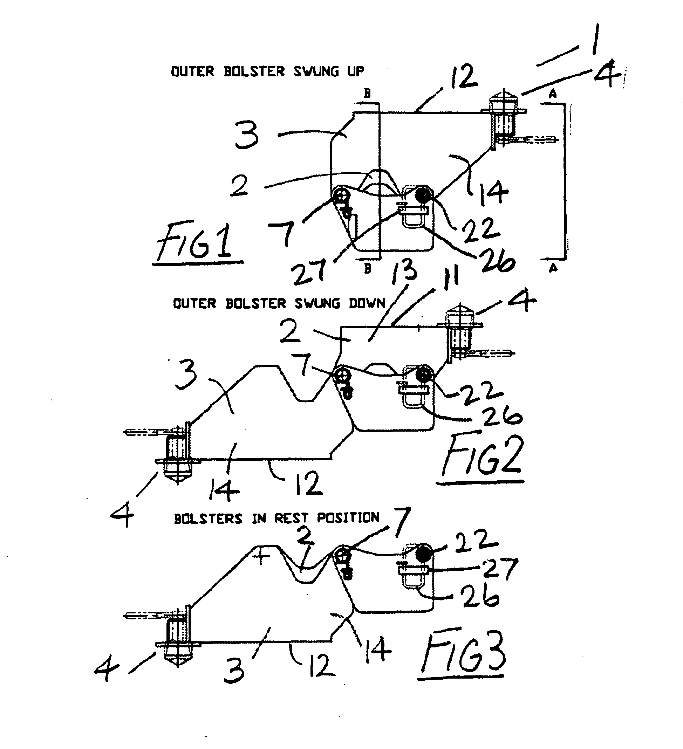

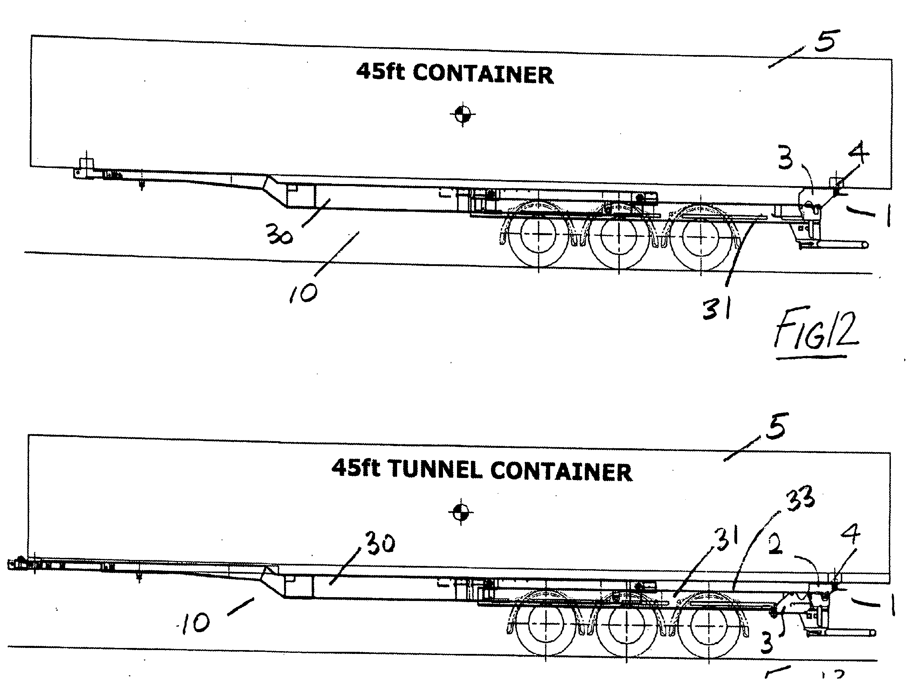

Referring to the drawings, there is illustrated an adjustable bolster assembly for a semi-trailer indicated generally by the reference numeral 1. The assembly 1 includes a pair of bolsters, namely an inner bolster 2 and an outer bolster 3. Each bolster 2, 3 carries twistlock 4 of conventional construction for engagement with a container 5 (as shown in Figs. 12 to 15). The inner bolster 2 is nestable within the outer bolster 3 as shown in Fig. 1 which shows the outer bolster 3 in a raised in-use position. The outer bolster 3 can be swung downwardly away from the inner bolster 2 to expose the inner bolster 2 for use as shown in Fig. 2. Also the inner bolster 2 can be swung downwardly into the outer bolster 3 as shown in Fig. 3 so that both bolsters 2, 3 are nested in a stored position.

Both bolsters 2, 3 are mounted by a common pivot pin 7 on a laterally extending support arm 8 at a rear end of a semi-trailer indicated generally by the reference numeral 10.

Each bolster 2, 3 has an inverted U-shape with an upper container bearing platform 11, 12 and downwardly depending side legs 13, 14.

An inner mounting bracket 16 and an outer mounting bracket 17 are provided on the support arm 8 for securing the bolsters 2, 3 on the support arm 8. The pivot pin 7 extends substantially horizontally through bushings 18, 19 at a front end of each of the inner mounting bracket 16 and outer mounting bracket 17 and through associated bushings at a lower front end of each side leg 13, 14 of the bolsters 2, 3.

In similar fashion a locking pin 22 is slidably engagable with through-holes 24, 25 at a rear end of each of the inner mounting bracket 16 and outer mounting bracket 17 respectively and also with associated through-holes at a rear end of each side leg 13, 14 of the bolsters 2, 3. Also each bolster 2, 3 can be locked in the raised in-use position as shown in Figs. 1 and 2. A handle 26 is slidably mounted at an outer end of the locking pin 22 and can slide downwardly into engagement with a keeper 27 on an outside face of the outer mounting bracket 17 to securely retain the locking pin 22 in engagement whilst at the same time being readily easily releasable when required.

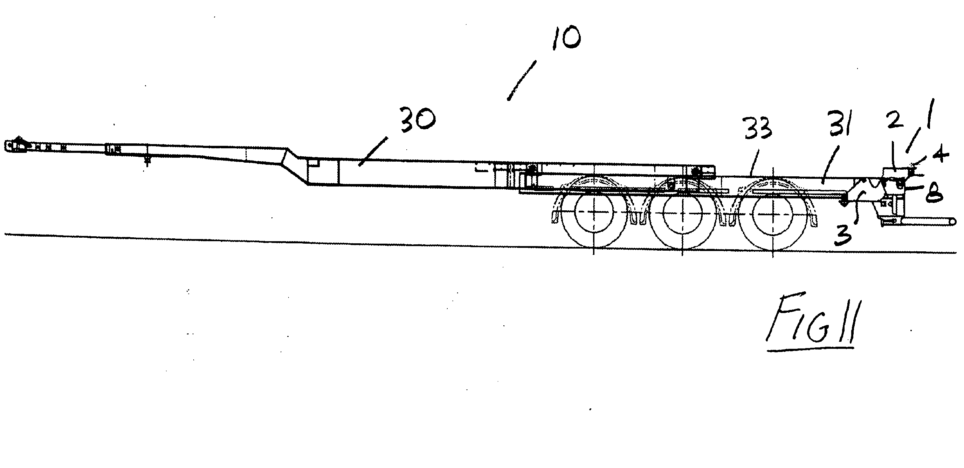

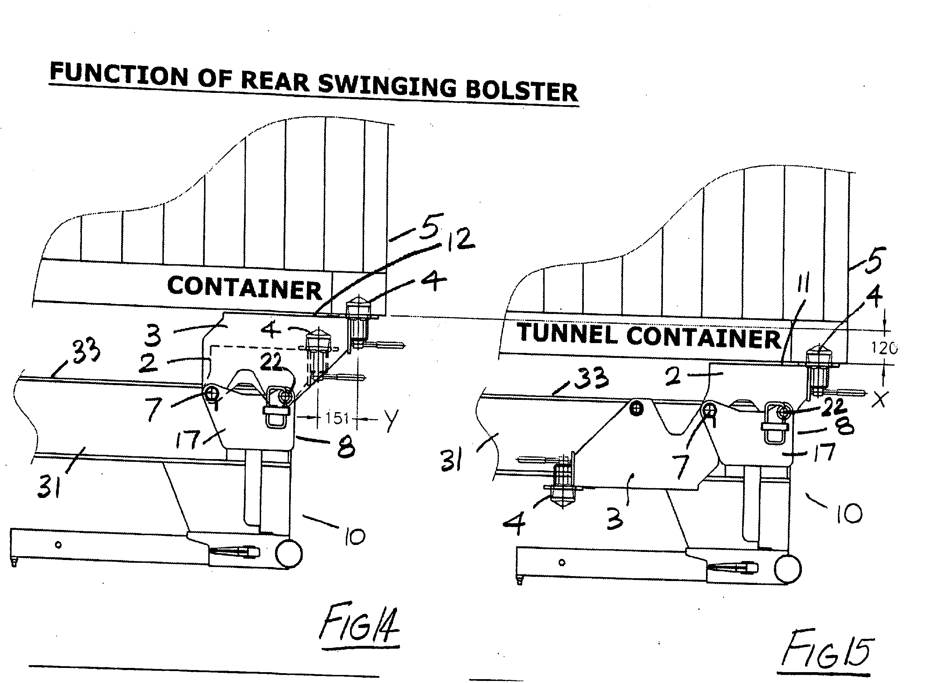

Referring in particular to Fig. 11 the semi-trailer 10 is shown which is a Gooseneck sliding skeletal trailer. This has a front part 30 and a complementary rear part 31 which are slidably interconnected for length adjustment of the semi-trailer 10. A pair of the adjustable bolster assemblies 1 are mounted in alignment at opposite sides of the semi-trailer 10 at a rear end of the rear part 31 of the semi-trailer 10. In the extended position, as shown in Figs. 11 to 15 and with the bolster assemblies 1 in the fully raised position, i.e. with the outer bolster 3 in a raised in-use position (corresponding to the position shown in Figs. 12 and 14) a 45 ft container can be mounted on the semi-trailer 10 as shown.

By swinging the outer bolster 3 into the lowered position (as shown in Figs. 2, 11, 13 and 15), a 45 ft tunnel container can be mounted in a lower position on the semi-trailer as shown in Fig. 13 and Fig. 15.

It will be appreciated that each bolster 2, 3 can be readily swung by the vehicle operator between the raised in-use positions and the lowered stored positions as required. Each bolster 2, 3 conveniently folds forwardly into the stored position when not required for use. It will be noted also that when in the stored position the bolsters 2, 3 do not project above a top surface 33 of a rear part 31 of the semi-trailer 10. In effect they need to be low enough in the lowered stored position to pass beneath any lateral projections (such as bolster carrying arms) at a rear end of the front part 30 of the semi-trailer 10 to allow the trailer parts 30, 31 fully collapse together. In the stored position both bolsters 2, 3 are out of the way when sliding the trailer parts 30, 31 into a closed position.

As illustrated in Figs 14 and 15 there is a 120mm height variation X and a 151 mm horizontal variation Y in the twistlock locations on the two bolsters 2, 3. Various other spacings may be provided as required. Each bolster 2, 3 is light enough for a single person to move between the various positions.

The invention is not limited to the embodiments hereinbefore described which may be varied in both construction and detail within the scope of the appended claims.

## Claims

1. A semi-trailer (10) having an adjustable bolster assembly (1), said bolster assembly (1) including:
a pair of bolsters (2,3),
each bolster (2,3) carrying a twistlock (4),
means for mounting each bolster (2,3) on the semi-trailer (10),
**characterised in that** said bolsters (2,3) comprise an inner bolster (2) and an outer bolster (3),
the inner bolster (2) being nestable within the outer bolster (3) when the outer bolster (3) is in an in-use position and the bolsters (2,3) being movable relative to each other to expose the inner bolster (2) for use.

2. A semi-trailer (10) as claimed in claim 1 wherein the inner bolster (2) and the outer bolster (3) are pivotally movable together and apart.

3. A semi-trailer (10) as claimed in claim 1 or claim 2 wherein the bolsters (2,3) are pivotally movable about a substantially horizontal pivot axis.

4. A semi-trailer (10) as claimed in any preceding claim wherein a common pivot pin (7) is provided for pivotally mounting both the inner bolster (2) and the outer bolster (3) on the semi-trailer (10).

5. A semi-trailer (10) as claimed in claim 4 wherein each bolster (2,3) is pivotally mounted on the pivot pin (7) for movement between a nested in-use position and a nested stored position.

6. A semi-trailer (10) as claimed in claim 4 or 5 wherein each bolster (2,3) is pivotable about the pivot pin (7) between a raised in-use position above the pivot pin (7) and a lowered stored position below the pivot pin (7).

7. A semi-trailer (10) as claimed in any preceding claim wherein locking means (22) is provided for releasably locking each bolster (2,3) in an in-use position.

8. A semi-trailer (10) as claimed in claim 7 wherein the locking means comprises a locking pin (22) engagable between each bolster (2,3) and a bolster support (16,17) on the trailer 10.

9. A semi-trailer (10) as claimed in any preceding claim wherein each bolster (2,3) has an inverted U-shape with an upper container bearing platform (11,12) and downwardly depending side legs (13,14) for resting on a support (8) on the semi-trailer (10).

10. A semi-trailer (10) as claimed in claim 9 wherein the pivot pin (7) is engagable with a lower end of each side leg (13,14) at a front end of the side leg (13,14).

11. A semi-trailer (10) as claimed in any preceding claim incorporating a pair of the adjustable bolster assemblies (1) in alignment at opposite sides of the semi-trailer (10).

12. A semi-trailer (10) as claimed in claim 11 wherein the bolster assemblies (1) are mounted at a rear end of the semi-trailer (10).

13. A semi-trailer (10) as claimed in claim 11 or 12 wherein the semi-trailer (10) is an extendable trailer, having a front part (30) and a rear part (31) which are slidably interconnected for length adjustment of the trailer.

14. A semi-trailer (10) as claimed in any of claims 11 to 13 wherein the bolsters (2,3) are pivotally mounted on the trailer such that they lie below a top surface (33) of the rear part (31) of the trailer when the bolsters (2,3) are in the lowered stored position.

15. A semi-trailer (10) as claimed in any of claims 11 to 14 wherein the bolsters are pivotally mounted on the rear part (31) of the trailer such that when the bolsters

## Patentansprüche

1. Sattelanhänger (10) mit einer einstellbaren Stützklotzbaugruppe (1), wobei die Stützklotzbaugruppe (1) Folgendes enthält:
ein Paar Stützklötze (2, 3),
wobei jeder Stützklotz (2, 3) einen Verriegelungszapfen (4) trägt,
Mittel zum Anbringen jedes Stützklotzes (2, 3) an dem Sattelanhänger (10),
**dadurch gekennzeichnet, dass** die Stützklötze (2, 3) einen inneren Stützklotz (2) und einen äußeren Stützklotz (3) aufweisen,
wobei der innere Stützklotz (2) in den äußeren Stützklotz (3) geschoben werden kann, wenn sich der äußere Stützklotz (3) in einer Position in Gebrauch befindet, und die Stützklötze (2, 3) in Bezug zueinander bewegt werden können, um den inneren Stützklotz (2) zum Gebrauch freizulegen.

2. Sattelanhänger (10) nach Anspruch 1, bei dem der innere Stützklotz (2) und der äußere Stützklotz (3) schwenkbar zusammen und auseinander bewegt werden können.

3. Sattelanhänger (10) nach Anspruch 1 oder Anspruch 2, bei dem die Stützklötze (2, 3) schwenkbar um eine im Wesentlichen horizontale Drehachse bewegt werden können.

4. Sattelanhänger (10) nach einem vorhergehenden Anspruch, bei dem ein gemeinsamer Drehzapfen (7) zum schwenkbaren Anbringen sowohl des inneren Stützklotzes (2) als auch des äußeren Stützklotzes (3) an dem Anhänger (10) vorgesehen ist.

5. Sattelanhänger (10) nach Anspruch 4, bei dem jeder Stützklotz (2, 3) schwenkbar an dem Drehzapfen (7) zur Bewegung zwischen einer verschachtelten Position in Gebrauch und einer verschachtelten Lagerposition angebracht ist.

6. Sattelanhänger (10) nach Anspruch 4 oder 5, bei dem jeder Stützklotz (2, 3) um den Drehzapfen (7) zwischen einer angehobenen Position in Gebrauch über dem Drehzapfen (7) und einer abgesenkten Lagerposition unter dem Drehzapfen (7) geschwenkt werden kann.

7. Sattelanhänger (10) nach einem vorhergehenden Anspruch, bei dem ein Verriegelungsmittel (22) zum lösbaren Verriegeln jedes Stützklotzes (2, 3) in einer Position in Gebrauch vorgesehen ist.

8. Sattelanhänger (10) nach Anspruch 7, bei dem das Verriegelungsmittel einen Verriegelungszapfen (22) aufweist, der zwischen jedem Stützklotz (2, 3) und einer Stützklotzabstützung (16, 17) auf dem Anhänger 10 in Eingriff gebracht werden kann.

9. Sattelanhänger (10) nach einem vorhergehenden Anspruch, bei dem jeder Stützklotz (2, 3) eine umgekehrte U-Form mit einer oberen Containertrageplattform (11, 12) und nach unten herabhängenden Seitenfüßen (13, 14) zum Ruhen auf einer Abstützung (8) auf dem Sattelanhänger (10) aufweist.

10. Sattelanhänger (10) nach Anspruch 9, bei dem der Drehzapfen (7) mit einem unteren Ende jedes Seitenfußes (13, 14) an einem vorderen Ende des Seitenfußes (13, 14) in Eingriff gebracht werden kann.

11. Sattelanhänger (10) nach einem vorhergehenden Anspruch, der ein Paar der einstellbaren Stützklotzbaugruppen (1) in Ausrichtung an gegenüberliegenden Seiten des Sattelanhängers (10) aufweist.

12. Sattelanhänger (10) nach Anspruch 11, bei dem die Stützklotzbaugruppen (1) an einem hinteren Ende des Sattelanhängers (10) angebracht sind.

13. Sattelanhänger (10) nach Anspruch 11 oder 12, bei dem der Sattelanhänger (10) ein ausfahrbarer Anhänger mit einem vorderen Teil (30) und einem hinteren Teil (31) ist, die verschiebbar zur Längenanpassung des Anhängers miteinander verbunden sind.

14. Sattelanhänger (10) nach einem der Ansprüche 11 bis 13, bei dem die Stützklötze (2, 3) schwenkbar an dem Anhänger so angebracht sind, dass sie unter einer oberen Fläche (33) des hinteren Teils (31) des Anhängers liegen, wenn sich die Stützklötze (2, 3) in der abgesenkten Lagerposition befinden.

15. Sattelanhänger (10) nach einem der Ansprüche 11 bis 14, bei dem die Stützklötze schwenkbar an dem hinteren Teil (31) des Anhängers angebracht sind, so dass, wenn die Stützklötze (2, 3) sich in der abgesenkten Lagerposition befinden, sie unter jegliche seitliche Vorsprünge an einem hinteren Ende des vorderen Teils (30) des Anhängers verschoben werden können, um die Anhängerteile (30, 31) zusammenzuklappen.

## Revendications

1. Semi-remorque (10) ayant un ensemble sommier réglable (1), ledit ensemble sommier (1) comprenant :
une paire de sommiers (2, 3),
chaque sommier (2, 3) portant un verrou rotatif (4),
des moyens permettant de monter chaque sommier (2, 3) sur la semi-remorque (10), **caractérisée en ce que** lesdits sommiers (2, 3) comportent un sommier intérieur (2) et un sommier extérieur (3),
le sommier intérieur (2) étant emboîtable à l'intérieur du sommier extérieur (3) quand le sommier extérieur (3) est dans une position de type en cours de fonctionnement et les sommiers (2, 3) étant mobiles l'un par rapport à l'autre pour exposer le sommier intérieur (2) à des fins de fonctionnement.

2. Semi-remorque (10) selon la revendication 1, dans laquelle le sommier intérieur (2) et le sommier extérieur (3) sont mobiles de manière pivotante l'un vers l'autre et l'un à l'opposé de l'autre.

3. Semi-remorque (10) selon la revendication 1 ou la revendication 2, dans laquelle les sommiers (2, 3) sont mobiles de manière pivotante autour d'un axe de pivot sensiblement horizontal.

4. Semi-remorque (10) selon l'une quelconque des revendications précédentes, dans laquelle un pivot commun (7) est mis en oeuvre à des fins de montage pivotant à la fois du sommier intérieur (2) et du sommier extérieur (3) sur la semi-remorque (10).

5. Semi-remorque (10) selon la revendication 4, dans laquelle chaque sommier (2, 3) est monté de manière pivotante sur le pivot (7) à des fins de mouvement entre une position de type en cours de fonctionnement emboîté et une position de type rangement emboîté.

6. Semi-remorque (10) selon la revendication 4 ou la revendication 5, dans laquelle chaque sommier (2, 3) est en mesure de pivoter autour du pivot (7) entre une position de type en cours de fonctionnement surélevé au-dessus du pivot et une position de type rangement emboîté sous le pivot (7).

7. Semi-remorque (10) selon l'une quelconque des revendications précédentes, dans laquelle un moyen de verrouillage (22) est mis en oeuvre à des fins de verrouillage libérable de chaque sommier (2, 3) dans une position de type en cours de fonctionnement.

8. Semi-remorque (10) selon la revendication 7, dans laquelle le moyen de verrouillage comporte une tige de verrouillage (22) en mesure de se mettre en prise entre chaque sommier (2, 3) et un support de sommier (16, 17) sur la remorque 10.

9. Semi-remorque (10) selon l'une quelconque des revendications précédentes, dans laquelle chaque sommier (2, 3) a une forme en U renversé avec un plateau d'appui de conteneur supérieur (11, 12) et des branches latérales dépendantes de manière orientée vers le bas (13, 14) à des fins de mise en appui sur un support (8) sur la semi-remorque (10).

10. Semi-remorque (10) selon la revendication 9, dans laquelle le pivot (7) est en mesure de se mettre en prise avec une extrémité inférieure de chaque branche latérale (13, 14) au niveau d'une extrémité avant de la branche latérale (13, 14).

11. Semi-remorque (10) selon l'une quelconque des revendications précédentes, incorporant une paire d'ensembles de sommiers réglables (1) alignés au niveau de côtés opposés de la semi-remorque (10).

12. Semi-remorque (10) selon la revendication 11, dans laquelle les ensembles de sommiers (1) sont montés au niveau d'une extrémité arrière de la semi-remorque (10).

13. Semi-remorque (10) selon la revendication 11 ou la revendication 12, dans laquelle la semi-remorque (10) est une remorque télescopique, ayant une partie avant (30) et une partie arrière (31) qui sont raccordées ensemble de manière coulissante à des fins de réglage de la longueur de la remorque.

14. Semi-remorque (10) selon l'une quelconque des revendications 11 à 13, dans laquelle les sommiers (2, 3) sont montés de manière pivotante sur la remorque de sorte qu'ils reposent sous une surface supérieure (33) de la partie arrière (31) de la remorque quand les sommiers (2, 3) sont dans la position de type rangement abaissé.

15. Semi-remorque (10) selon l'une quelconque des revendications 11 à 14, dans laquelle les sommiers sont montés de manière pivotante sur la partie arrière (31) de la remorque de sorte que quand les sommiers (2, 3) sont dans la position de type rangement abaissé ils sont en mesure de coulisser sous des parties saillantes latérales quelconques au niveau d'une extrémité arrière de la partie avant (30) de la remorque en vue d'escamoter ensemble les parties (30, 31) de la remorque.
